# EUROPÄISCHE PATENTSCHRIFT

(11) **EP 0 827 854 B1**
(45) Veröffentlichungstag und Bekanntmachung des Hinweises auf die Patenterteilung: **04.08.2004**
(21) Anmeldenummer: 97114821.8
(22) Anmeldetag: 27.08.1997
(51) Int. Cl.: B60H 1/22

(54) **Verfahren und Vorrichtung zum Betreiben eines motorunabhängigen Fahrzeug-Heizgeräts**
Method and apparatus for operating a vehicle heating system independent of the engine
Procédé et dispositif pour faire fonctionner un appareil de chauffage pour véhicule, indépendant du moteur

(30) Priorität: 07.09.1996 DE 19636430
(43) Veröffentlichungstag der Anmeldung: 11.03.1998
(73) Patentinhaber: WEBASTO THERMOSYSTEME GmbH, D-82131 Stockdorf (DE)
(72) Erfinder: Bächle, Georg, 82110 Germering (DE); Glaser, Peter, 81477 München (DE); Habbel, Georg, 82110 Germering (DE); Riedmaier, Josef, 82349 Pentenried (DE); Schönberger, Hermann, 82110 Germering (DE)
(74) Vertreter: Wiese, Gerhard

(56) Entgegenhaltungen:
- DE-A- 4 447 285
- GB-A- 2 219 403
- US-A- 4 396 369
- US-A- 5 366 151

## Beschreibung

Die Erfindung betrifft ein Verfahren und eine Vorrichtung zum Betreiben eines motorunabhängigen Fahrzeug-Heizgeräts, bei dem einem Brenner durch eine Dosiereinrichtung Brennstoff und durch eine Fördereinrichtung Brennluft zugeführt wird, bei dem die Flamme des Brenners überwacht wird, und bei dem die Brennluft- und/oder Brennstoffmenge durch ein Steuergerät geregelt wird.

Ein derartiges Verfahren ist beispielsweise aus der DE 43 11 080 C1 bekannt. Die Brennluft- bzw. Brennstoffmengenregelung bei diesem bekannten Verfahren bietet die Möglichkeit, daß das in Rede stehende Heizgerät ungeachtet Toleranzen der Fördereinrichtung für die Brennluft bzw. der Dosiereinrichtung für den Brennstoff einen korrekten Abgaswert hat.

Zum Einstellen eines korrekten Abgaswerts, nämlich eines korrekten CO₂-Werts oder eines korrekten O₂-Werts ist es herkömmlicherweise vorgesehen, diesen an einem Prüfstand vor Auslieferung einzustellen. Nachteilig ist dabei, daß mit Schwankungen beispielsweise der Lufttemperatur oder des Luftdrucks auch stets Schwankungen des entsprechenden Abgaswerts einhergehen. Ein weiterer Nachteil besteht darin, daß durch die bei der Regelung vorgesehene Drosselung des Brennluftstroms weniger Heizleistung erzeugt wird als eigentlich möglich wäre.

Aus der DE 30 31 410 C2 ist ein weiteres Verfahren der vorstehend genannten Art bekannt, bei dem das Heizgerät unter Berücksichtigung der Fahrzeug-Bordspannung betrieben wird. Zu diesem Zweck wird die Bordspannung als Störgröße zur Kompensation von schlechten Luftverhältnis- bzw. λ-Werten genutzt, indem das Steuergerät beim Absinken der Bordspannung die Brennstoffzufuhr selbständig drosselt, um dadurch λ konstant zu halten.

Aus der DE 42 17 150 C1 ist es zur Einstellung eines optimalen CO₂-Werts bei einem motorunabhängigen Fahrzeug-Heizgerät bekannt, den Absolutdruck zu messen und in die Regelung miteinzubeziehen.

Bei einem aus der DE 38 07 388 A1 bekannten Verfahren zum Betreiben eines motorunabhängigen Fahrzeug-Heizgeräts wird das Luftverhältnis λ auf der Basis der in der Brennkammer gemessenen Flammtemperatur ermittelt.

Jedes der vorstehend zum Stand der Technik genannten Verfahren zum Betreiben eines motorunabhängigen Fahrzeug-Heizgeräts sieht eine indirekte Ermittlung des relevanten Abgaswerts vor, welche die folgenden Nachteile hat: der CO₂- bzw. O₂-Gehalt des Abgases wird durch Drehzahlschwankungen des Gebläsemotors, durch Einlaufen und veränderliche Betriebstemperatur ebenso beeinträchtigt wie durch Toleranzen von Brennstoffpumpen und Brennstoffgebläsen, Schwankungen der Brennstoffdichte und Brennstoffzusammensetzung, Temperaturabhängigkeiten des Förderverhaltens, die Lufttemperatur und vor allem den Luftdruck, die spezielle Art der Einbindung des Heizgeräts und durch den Druckverlust und die luftseitige Leckage des Heizgeräts. Von großem Nachteil ist ferner die grundsätzlich erforderliche Warmeinstellung des Heizgeräts am Endprüfstand des Herstellers.

Ein weiterer Nachteil herkömmlicher Verfahren der in Rede stehenden Art besteht in der Notwendigkeit eines speziellen Flammwächters zur Flammerkennung.

Die DE 44 47 285 A1 offenbart ein Fahrzeug-Heizgerät gemäß dem Oberbegriff des Anspruchs 8, das ein Verfahren zum Betreiben eines motorunabhängigen Fahrzeug-Heizgeräts gemäß dem Oberbegriff des Anspruchs 1 ausführt. Es sind keine besonderen Maßnahmen vorgesehen, um die Betriebssicherheit vor Beginn der Regelung der Brennluft- und/oder Brennstoffmenge zu erhöhen.

Aus der US 4,396,369 ist ein Fahrzeug-Heizgerät mit einem Brenner bekannt, bei dem beim Optimieren der Abgaswerte automatisch eine Stabilisierung bzw. Überwachung der Flamme des Brenners erreicht wird. Auch bei diesem Fahrzeug-Heizgerät sind keine besonderen Maßnahmen vorgesehen, um die Betriebssicherheit vor Beginn der Regelung der Brennluftund/oder Brennstoffmenge zu erhöhen.

Eine Aufgabe der vorliegenden Erfindung besteht darin, die vorstehend genannten Nachteile zu überwinden und ein Verfahren sowie eine Vorrichtung zum Betreiben eines motorunabhängigen Fahrzeug-Heizgeräts zu schaffen, durch welche ein optimaler gleichmäßiger Verbrennungszustand erreicht wird, das außerdem die Aufgabe der Flammerkennung übernimmt und dessen Betriebssicherheit vor Beginn der Regelung der Brennluft- und/oder Brennstoffmenge verbessert ist.

Gelöst wird diese Aufgabe hinsichtlich des Verfahrens durch die Merkmale des Anspruchs 1 und hinsichtlich der Vorrichtung durch die Merkmale des Anspruchs 8. Vorteilhafte Weiterbildungen der Erfindung sind in den Unteransprüchen angegeben.

Mit anderen Worten schafft die Erfindung ein Verfahren und eine Vorrichtung zum Betreiben eines motorunabhängigen Fahrzeug-Heizgeräts bei direkter Erfassung des jeweiligen relevanten Abgaswerts und Regelung des Brennstoff/Luftgemisches aufgrund dieses direkt erfaßten Abgaswerts. Erreicht wird dies durch Plazierung eines Abgassensors im Abgasstrom des Heizgeräts, wobei das Ausgangssignal dieses Sensors im Steuergerät ausgewertet wird, das eine entsprechende Verstellung beispielsweise des Dosierpumpentakts oder der Gebläse-Drehzahl zur Regelung auf den gewünschten Abgaswert vorsieht.

Ein wesentlicher Aspekt des erfindungsgemäßen Verfahrens besteht darin, daß das Abgassensorsignal problemlos für eine zuverlässige Flammerkennung eingesetzt werden kann, so daß sich ein spezieller Flammwächter erübrigt.

Weiterhin werden sämtliche vorstehend zum Stand der Technik genannten Nachteile durch das erfindungsgemäße Verfahren überwunden. Insbesondere entfallen durch das erfindungsgemäße Verfahren aufwendige Einstellarbeiten am Prüfstand bei der Endfertigung, was unmittelbar zu einem Kostenvorteil führt. Ein Vorteil für den Benutzer eines motorunabhängigen Fahrzeug-Heizgeräts, das in Übereinstimmung mit dem erfindungsgemäßen Verfahren betrieben wird, besteht in der Ausnutzung der maximal möglichen Heizleistung, da die Drosselung des Luftstroms und damit die Erzeugung von weniger Heizleistung, wie beim Stand der Technik unvermeidlich, entfallen kann. Ferner verhindert das erfindungsgemäße Verfahren Brennerprobleme durch "Weglaufen" der Abgaswerte, was zu dem erfindungsgemäß erreichbaren optimalen gleichmäßigen Verbrennungszustand des Heizgeräts beiträgt. Schließlich entfällt ein Flammwächter als zusätzliches Bauteil, da das erfindungsgemäße Verfahren in der Lage ist, diese Funktion durch entsprechende Auswertung des Abgassensorwerts zu übernehmen. Außerdem wird im Rahmen des erfindungsgemäßen Verfahrens eine vorteilhafte und zuverlässige Sicherheitsprüfung ausgeführt.

In den Patentansprüchen 3 und 4 sind besonderes vorteilhafte Verfahrensvarianten zur Überwachung der Flamme bzw. zur Optimierung der Flammstabilität vor Flammübernahme genannt.

In den Patentansprüchen 6 und 7 sind vorteilhafte Maßnahmen zur zuverlässigen Störfallerkennung aufgeführt.

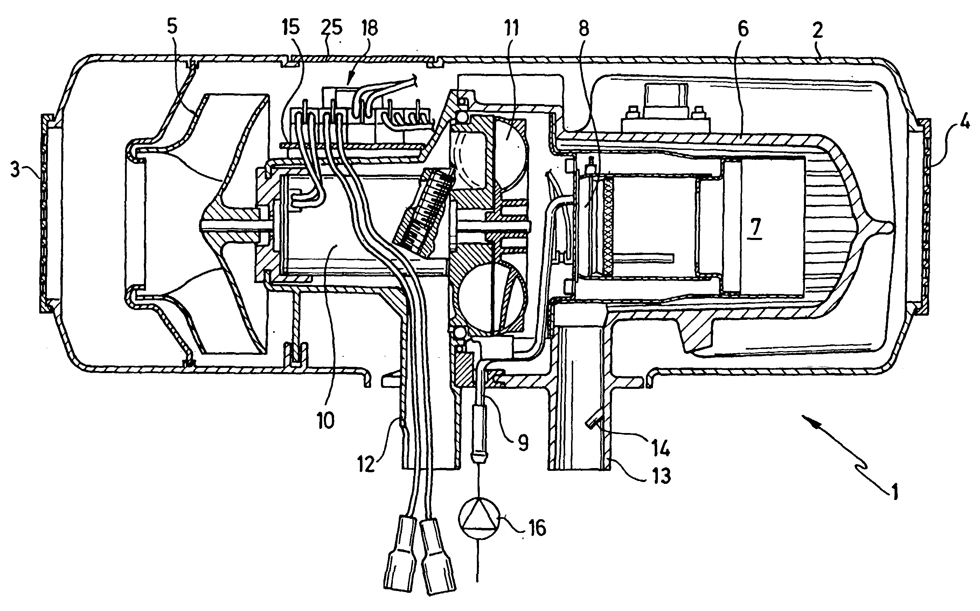

Nachfolgend wird die Erfindung anhand der Zeichung beispielhaft näher erläutert. Die einzige Figur der Zeichnung zeigt einen Längsschnitt durch ein erfindungsgemäß ausgebildetes Fahrzeug-Heizgerät.

Das in der Figur allgemein mit 1 bezeichnete Fahrzeug-Heizgerät ist im vorliegenden Beispiel als Luftheizgerät ausgebildet. Für die vorliegende Erfindung sind jedoch ebenso gut Fahrzeug-Heizgeräte geeignet, die in den Kühlwasserkreislauf eines Fahrzeugs geschaltet sind.

Das Fahrzeug-Heizgerät 1 umfaßt ein Gehäuse 2 mit zwei stirnseitigen Öffnungen an einer Eintrittsseite 3 und einer Austrittsseite 4. Innerhalb des Gehäuses 2 wird von der Eintrittsseite 3 zur Austrittsseite 4 mittels eines Heißluftgebläses 5 Heißluft über einen Wärmetauscher 6 zur Erwärmung eines nicht dargestellten Fahrzeuginnenraums gefördert. Die zur Erwärmung des Wärmetauschers 6 erforderliche Energie wird den von einem Brenner 8 in einer anschließenden Brennkammer 7 erzeugten heißen Brenngasen entzogen. Dem Brenner 8 wird Brennstoff von einer Brennstoffpumpe 16 über eine Brennstoffleitung 9 sowie Brennluft mittels eines Gebläses 11 zugeführt. Das dabei entstehende Brennstoff-Luftgemisch wird mittels einer nicht näher dargestellten Zündeinrichtung gezündet, und die entstehenden heißen Abgase verlassen nach Erwärmen des Wärmetauschers 6 über einen Abgasstutzen 13 das Heizgerät 1. Die vom Gebläse 11 geförderte Brennluft wird über einen Ansaugstutzen 12 angesaugt.

Das Brennluftgebläse 11 und das Heißluftgebläse 5 werden mittels eines Elektromotors 10 angetrieben. Die Drehzahl dieses Elektromotors 10 ist durch ein Steuergerät 18 ebenso steuerbar wie die Frequenz der Brennstoffpumpe 16.

Die zur Steuerung des Heizgeräts erforderlichen Bauteile sind im Steuergerät 18 auf einer Platine 15 zusammengefaßt. Das Steuergerät 18 umfaßt einen nicht dargestellten Mikroprozessor, in den ein Analog/Digital-Wandlerteil integriert ist, dem ein Meßsignal, beispielsweise ein Spannungssignal, eines nachfolgenden näher erläuterten Abgassensors 14 zugeführt wird. Der Mikroprozessor ist ferner mit einem ebenfalls nicht dargestellten Datenspeicher verbunden, in den Daten eingeschrieben und aus dem Daten gelesen werden können. In dem Datenspeicher sind unter anderem Sollwerte gespeichert, die der nachfolgend erläuterten Regelung des Brennstoff-/Luftgemisches dienen. Der Mikroprozessor des Steuergeräts 18 steuert über entsprechende Ausgänge die Drehzahl des Gebläses 11 und die Drehzahl bzw. die Taktfrequenz der Brennstoffpumpe. Um nachträgliche Einstellungen bzw. eine Wartung des Steuergeräts 18 zu ermöglichen, ist ein Deckel 25 vorgesehen, nach dessen Abnehmen das Steuergerät 18 zugänglich ist.

Der Zweck des Abgassensors 14 sowie seine Funktion in Verbindung mit dem Steuergerät 18 wird nunmehr erläutert. Der Abgassensor ist entweder als CO₂-Sensor, CO-Sensor oder als O₂-Sensor ausgebildet.

Der Abgassensor des Heizgeräts 1, der in den Abgasstutzen des Heizgeräts 1 eingebaut ist, wobei seine innerhalb des Heizgeräts 1 integrierte Verkabelung zum Steuergerät 18 nicht dargestellt ist, mißt den CO₂-, CO- bzw. O₂-Gehalt im Abgas des Heizgeräts 1. Das Ausgangssignal des Abgassensors 14 kann ein Strom- oder ein Spannungswert sein, der, wie vorstehend angeführt, im Analog/Digital-Wandlerteil des Steuergeräts 18 in ein digitales Signal gewandelt und im Steuergerät 18 ausgewertet wird. Diese Auswertung bewirkt Steuereingriffe, beispielsweise in eine Brennstoffpumpe 16, das Heizluftgebläse 5, die Zündeinrichtung und dergleichen.

Ein typischer Steuerungsablauf entsprechend dem erfindungsgemäßen Verfahren zum Betreiben eines motorunabhängigen Fahrzeug-Heizgeräts 1 ist wie folgt.

Der Abgassensor 14 wird zusammen mit einem Einschaltimpuls zum Einschalten des Heizgeräts 1 aktiviert. Daraufhin prüft zunächst ein Sicherheitsschaltkreis im Steuergerät 18, ob unmittelbar folgend auf den Einschaltimpuls der Abgassensor 14 ein logisch vernünftiges Signal liefert (Plausibilitätsprüfung). Im Fall, daß der Abgassensor 14 ein CO- oder CO₂-Sensor ist, ist ein vernünftiges Signal bzw. ein plausibler Wert: 0% CO₂ bzw. CO; der entsprechende plausible Wert im Fall eines O₂-Sensors wäre beispielsweise 21%, da das Heizgerät 1 jeweils noch nicht arbeitet.

Folgend auf diese sowie weitere Sicherheitsprüfungen von Bestandteilen des Heizgeräts 1 läuft ein sogenanntes Startmuster ab, das auch eine sogenannte Sicherheitszeit für die Brennstofförderung beinhaltet. Innerhalb dieser Sicherheitszeit bildet sich die Flamme im Heizgerät aus, wodurch der vorstehend genannte CO₂- bzw. O₂-Wert des Abgases, gemessen durch den Abgassensor 14 im Abgasstutzen 13 des Heizgeräts Werte > 0% im Falle einer CO- oder CO₂-Messung und < 21% im Falle einer O₂-Messung annimmt, und ein entsprechender Strom- bzw. Spannungswert an das Steuergerät 18 übermittelt wird.

Hierauf folgt vor der sogenannten Flammübernahme ein Regelzyklus zur Einstellung der Flammstabilität, der erfindungsgemäß vorgesehen ist, um den bei herkömmlichen Heizgeräten der in Rede stehenden Art verwendeten Flammwächter funktionell in eleganter Weise zu ersetzen.

Überschreitet der CO₂-Wert einen Schwellenwert von 8 % CO₂ oder der CO-Wert einen Schwellenwert von 500 ppm bzw. unterschreitet der O₂-Wert beispielsweise einen Schwellenwert von 10% O₂, kann von einer stabil ausgebildeten Flamme ausgegangen werden, und in diesem Fall werden die an sich bekannten Maßnahmen von dem Steuergerät 18 getroffen, wie beispielsweise Ausschalten der Zündquelle, Herauffahren einer Laststufe und dergleichen. Sollte jedoch nach oder während der Ausführung dieser Maßnahmen der CO₂-Wert bzw. der O₂-Wert, gemessen durch den Abgassensor 14 im Abgasstutzen 13 des Heizgeräts 1, unter einen beispielhaften Sollwert von 6% CO₂ fallen bzw. über einen beispielhaften Sollwert von 13% O₂ steigen, kann von einer Destabilisierung der Flamme ausgegangen werden, wobei erneute Maßnahmen zur Stabilisierung der Flamme getroffen werden müssen, nämlich beispielsweise Einschalten der Zündquelle, Herunterfahren der Laststufe und dergleichen. Ein entsprechender Regelzyklus wird solange durchgeführt, bis Flammstabilität vorliegt, nämlich Übereinstimmung von Ist- und Sollwert des CO₂- bzw. O₂-Gehalts im Abgas. Nunmehr erfolgt die Flammübernahme.

Auf die Flammübernahme durch Erkennen des genannten Sollwerts folgt beim erfindungsgemäßen Verfahren eine kontinuierliche Regelung der Brennluft- und/oder Brennstoffmenge zur konstanten Erzielung eines optimalen gleichmäßigen Verbrennungszustands des Heizgeräts 1. Zu diesem Zweck ist in dem vorstehend genannten Speicher des Steuergeräts 18 ein entsprechender optimaler CO- bzw. CO₂-Sollwert bzw O₂-Sollwert von z.B. 12% CO₂ bzw. 4,5% O₂ gespeichert, auf den in an sich bekannter Weise die Einregelung des entsprechenden Istwerts erfolgt. Das Steuergerät 18 hält bei Übereinstimmung von Soll- und Istwert beim weiteren Verbrennungsverlauf den CO-, CO₂- bzw. den O₂-Wert, überwacht durch den Abgassensor 14, konstant.

Durch diese CO-, CO₂- bzw. O₂-Regelung wird ein optimaler Verbrennungszustand erreicht, der auch bei Schwankungen von Umgebungseinflüssen, wie beispielsweise unterschiedliche Ortshöhen über NN eingehalten wird. Ferner erübrigt sich eine werkseitige CO₂- bzw. O₂-Einstellung, wie bislang erforderlich, da Bauteiltoleranzen des Brennluftgebläses bzw. der Brennstoffpumpe durch Regelung des CO₂-Werts bzw. O₂-Werts des Abgases ausgeglichen werden.

Das erfindungsgemäße Verfahren sieht ferner einen Störfall-Erkennungszyklus vor, der das Heizgerät 1 abschaltet, wenn der optimale gleichmäßige Verbrennungszustand durch eine vorgegebene Maximalzahl von Regelschritten während der vorstehend genannten kontinuierlichen Regelung nicht erreicht wird.

### Bezugszeichenliste

- **1**: Heizgerät
- **2**: Gehäuse
- **3**: Eintrittsseite
- **4**: Austrittsseite
- **5**: Heizluftgebläse
- **6**: Wärmetauscher
- **7**: Brennkammer
- **8**: Brenner
- **9**: Brennstoffleitung
- **10**: Elektromotor
- **11**: Gebläse
- **12**: Ansaugstutzen
- **13**: Abgasstutzen
- **14**: Abgassensor
- **15**: Platine
- **16**: Brennstoffpumpe
- **18**: Steuergerät
- **25**: Deckel

## Patentansprüche

1. Verfahren zum Betreiben eines motorunabhängigen Fahrzeug-Heizgeräts (1), bei dem einem Brenner (8) durch eine Dosiereinrichtung (16) Brennstoff und durch eine Fördereinrichtung (11) Brennluft zugeführt wird, bei dem die Flamme des Brenners (8) überwacht wird und bei dem die Brennluft- und/oder Brennstoffmenge durch ein Steuergerät (18) geregelt wird, wobei ein im Abgasstrom durch einen Abgassensor (14) erfaßter Abgaswert zur Regelung der Brennluft- und/oder Brennstoffmenge für einen optimalen gleichmäßigen Verbrennungszustand des Heizgeräts in das Steuergerät (18) eingegeben wird,
**dadurch gekennzeichnet, daß**
der Abgaswert im Steuergerät (18) außerdem zur Überwachung bzw. Stabilisierung der Flamme des Brenners (8) ausgewertet wird und
beim Einschalten des Heizgeräts (1) vor Beginn der Regelung der Brennluftund/oder Brennstoffmenge eine Sicherheitsüberprüfung durchgeführt wird, bei der der Abgaswert auf Plausibilität, wie z.B. Meßwert "Null" vor Einleitung der Verbrennung, geprüft wird.

2. Verfahren nach Anspruch 1, **dadurch gekennzeichnet, daß** der Abgassensor (14) als CO₂-Sensor oder als O₂-Sensor ausgebildet ist.

3. Verfahren nach Anspruch 1 oder 2, **dadurch gekennzeichnet, daß** sich an die Sicherheitsüberprüfung ein Sicherheitszeitintervall anschließt, während welchem die Brennstoff-Förderung eingeregelt und die Flamme im Brenner (8) stabilisiert wird.

4. Verfahren nach Anspruch 3, **dadurch gekennzeichnet, daß** der vom Abgassensor (14) erfaßte Abgaswert zur Überwachung der Flamme zu einem Sollwert in Bezug gesetzt wird, der einer stabil ausgebildeten Flamme entspricht, und daß durch das Steuergerät zur Stabilisierung der Flamme ein Ist-/Sollwert-Regelzyklus für die Flammenstabilität betreffende Parameter, wie z.B. Einschalten einer Zündquelle, Herunterfahren einer Laststufe und dergl., bis zur Flammübernahme ausgeführt wird.

5. Verfahren nach Anspruch 4, **dadurch gekennzeichnet, daß** sich an die Flammübernahme eine kontinuierliche Regelung der Brennluft- und/oder Brennstoffmenge zur konstanten Erzielung des optimalen gleichmäßigen Verbrennungszustands des Heizgeräts (1) anschließt.

6. Verfahren nach Anspruch 5, **dadurch gekennzeichnet, daß** die Meßwerte des Abgassensors (14) zur Störfallerkennung herangezogen werden.

7. Verfahren nach Anspruch 6, **dadurch gekennzeichnet, daß** ein Störfall-Erkennungszyklus vorgesehen ist, der eine Abschaltung des Heizgeräts (1) vorsieht, wenn der optimale gleichmäßige Verbrennungszustand durch eine vorgegebene Maximalzahl von Regelschritten nicht erreicht wird.

8. Motorunabhängiges Fahrzeug-Heizgerät (1) mit einem Brenner (8), dem durch eine Dosiereinrichtung (16) Brennstoff und durch eine Fördereinrichtung (11) Brennluft zugeführt wird, mit einem Abgasstutzen (13), einem im Abgasstutzen (13) angeordneten Abgassensor (14), und mit einem mit dem Abgassensor (14) in Signalverbindung stehenden Steuergerät (18) zur Regelung der Brennluft- und/oder Brennstoffmenge,
**dadurch gekennzeichnet, daß** das Steuergerät (18)
einen Schaltkreis zum Durchführen einer Sicherheitsüberprüfung beim Einschalten des Heizgeräts (1) vor Beginn der Regelung der Brennluft- und/oder Brennstoffmenge enthält, und
die Regelung der Brennluft- und/oder Brennstoffmenge gemäß dem Verfahren nach einem der vorangehenden Ansprüche ausführt.

## Claims

1. Method for operating an engine-independent vehicle heater (1), in which a burner (8) is supplied with fuel by a metering device (16) and with combustion air by a delivery device (11), in which the flame of the burner (8) is monitored and in which the amount of combustion air and/or fuel is regulated by a controller (18), an exhaust gas value registered in the exhaust gas stream by an exhaust gas sensor (14) being put into the controller (18) in order to regulate the amount of combustion air and/or fuel for an optimum uniform combustion state of the heater,
**characterized in that**
the exhaust gas value is additionally evaluated in the controller (18) in order to monitor and stabilise the flame of the burner (8), and
when the heater (1) is turned on, before starting the regulation of the amount of combustion air and/or fuel, a safety check is carried out, in which the exhaust gas value is tested for plausibility, such as measured value "zero", before initiating the combustion.

2. Method according to Claim 1, **characterized in that** the exhaust gas sensor (14) is designed as a CO₂ sensor or as an O₂ sensor.

3. Method according to Claim 1 or 2, **characterized in that** a safety time interval follows the safety check, during which interval the delivery of fuel is adjusted and the flame in the burner (8) is stabilised.

4. Method according to Claim 3, **characterized in that**, for the purpose of monitoring the flame, the exhaust gas value registered by the exhaust gas sensor (14) is referred to a desired value which corresponds to a stably formed flame, and **in that**, in order to stabilise the flame, an actual value/desired value control cycle for the parameters relating to the flame stability, such as turning on an ignition source, shutting down a load stage and the like, is carried out by the controller until flame acceptance.

5. Method according to Claim 4, **characterized in that** the flame acceptance is followed by continuous regulation of the amount of combustion air and/or fuel for the purpose of constant achievement of the optimum uniform combustion state of the heater (1).

6. Method according to Claim 5, **characterized in that** the measured values from the exhaust gas sensor (14) are used for fault detection.

7. Method according to Claim 6, **characterized in that** a fault detection cycle is provided, which provides for the heater (1) to be switched off if the optimum uniform combustion state is not achieved by a predefined maximum number of control steps.

8. Engine-independent vehicle heater (1) comprising a burner (8) to which fuel is supplied by a metering device (16) and combustion air is supplied by a delivery device (11), comprising an exhaust gas connector (13), an exhaust gas sensor (14) arranged in the exhaust gas connector (13), and comprising a controller (18) with a signal connection to the exhaust gas sensor (14) for regulating the amount of combustion air and/or fuel,
**characterized in that**
the controller (18) contains a circuit for carrying out a safety check when the heater (1) is switched on, before starting the regulation of the amount of combustion air and/or fuel, and
carries out the regulation of the amount of combustion air and/or fuel in accordance with the method according to one of the preceding claims.

## Revendications

1. Procédé pour faire fonctionner un appareil de chauffage pour véhicule (1), indépendant du moteur, dans lequel on amène du combustible vers un brûleur (8), via un dispositif de dosage (16), et de l'air de combustion via un dispositif de transport (11), dans lequel la flamme du brûleur (8) est surveillée et dans lequel la quantité d'air de combustion et/ou de combustible est régulée par un appareil de commande (18), une valeur des gaz d'échappement, enregistrée par un capteur des gaz d'échappement (14) situé dans le flux des gaz d'échappement et destinée à réguler la quantité d'air de combustion et/ou de combustible étant introduite dans l'appareil de commande (18) pour un état de combustion régulier optimal de l'appareil de chauffage,
**caractérisé en ce que** la valeur des gaz d'échappement (18) est de plus exploitée pour surveiller ou, selon le cas, stabiliser la flamme du brûleur (8), et
lors de l'enclenchement de l'appareil de chauffage (1) et avant le début de la régulation de la quantité d'air de combustion et/ou de combustible, on réalise un contrôle de sécurité dans lequel on vérifie la plausibilité de la valeur des gaz d'échappement, comme par exemple la valeur de mesure "zéro" avant initiation de la combustion.

2. Procédé selon la revendication 1, **caractérisé en ce que** le capteur des gaz d'échappement (14) est réalisé en tant que capteur de CO₂ ou en tant que capteur d'O₂.

3. Procédé selon la revendication 1 ou 2, **caractérisé en ce que** le contrôle de sécurité est suivi d'un intervalle de sécurité pendant lequel l'apport en combustible est régulé et la flamme du brûleur (8) stabilisée.

4. Procédé selon la revendication 3, **caractérisé en ce que** la valeur des gaz d'échappement acquise par le capteur des gaz d'échappement (14) et destinée à surveiller la flamme est mise en relation avec une valeur théorique qui correspond à une flamme stable, et **en ce que** l'on exécute, par le biais de l'appareil de commande pour stabiliser la flamme, un cycle de régulation de valeur réelle/consigne relatif aux paramètres ayant trait à la stabilité de la flamme, comme par exemple la mise en marche d'une source d'allumage, la diminution d'un niveau de charge et équivalent, jusqu'à la réalisation de la flamme.

5. Procédé selon la revendication 4, **caractérisé en ce que** la réalisation de la flamme est suivie d'une régulation continue de la quantité d'air de combustion et/ou de combustible pour obtenir constamment l'état de combustion régulière optimale de l'appareil de chauffage (1).

6. Procédé selon la revendication 5, **caractérisé en ce que** les valeurs de mesure du capteur des gaz d'échappement (14) sont utilisées pour reconnaître un incident.

7. Procédé selon la revendication 6, **caractérisé en ce qu'**un cycle de reconnaissance d'incidents est prévu, lequei prévoit un arrêt de l'appareil de chauffage (1) lorsque l'état de combustion régulière optimale n'est pas atteint par un nombre maximum prédéfini d'étapes de régulation.

8. Appareil de chauffage pour véhicule (1), indépendant du moteur, comportant un brûleur (8) vers lequel on amène, par un dispositif de dosage (16), du combustible, et de l'air de combustion par un dispositif de transport (11), comportant une tubulure de gaz d'échappement (13), un capteur des gaz d'échappement (14) disposé dans la tubulure de gaz d'échappement (13) et un appareil de commande (18) en relation par signal avec le capteur des gaz d'échappement (14) et destiné à réguler la quantité d'air de combustion et/ou de combustible,
**caractérisé en ce que** l'appareil de commande (18) contient un circuit permettant de réaliser une vérification de sécurité lors de la mise en route de l'appareil de chauffage (1) avant le début de la régulation de la quantité d'air de combustion et/ou de combustible, et
**en ce que** la régulation de la quantité d'air de combustion et/ou de combustible se fait selon le procédé selon l'une des revendications précédentes.
